## Europäisches Patentamt
## European Patent Office
## Office européen des brevets

(19)

(11) Veröffentlichungsnummer: **0 011 679**
**B1**

(12) **EUROPÄISCHE PATENTSCHRIFT**

(45) Veröffentlichungstag der Patentschrift:
21.09.83

(51) Int. Cl.³: **H 01 S 3/03, H 01 S 3/097**

(21) Anmeldenummer: 79102819.4

(22) Anmeldetag: 01.06.78

(60) Veröffentlichungsnummer der früheren Anmeldung, nach Art. 76 EPÜ:

(54) **Gaslaser mit transversaler Anregung.**

(30) Priorität: 30.11.77 DE 2753304

(43) Veröffentlichungstag der Anmeldung:
11.06.80 Patentblatt 80/12

(45) Bekanntmachung des Hinweises auf die Patenterteilung:
21.09.83 Patentblatt 83/38

(84) Benannte Vertragsstaaten:
BE CH FR GB SE

(56) Entgegenhaltungen:
DE-A-2 051 734
DE-A-2 054 096
FR-A-2 394 907
US-A-3 740 662
US-A-4 080 578
IEEE JOURNAL OF QUANTUM ELECTRONICS, Band QE-8, Nr. 2, Februar 1972, Seiten 145–149 New York, U.S.A. P.R. PEARSON et al.: «Atmospheric pressure CO2 lasers giving high output energy per unit volume»

(73) Patentinhaber: ELTRO GmbH Gesellschaft für Strahlungstechnik, Kurpfalzring 106 Postfach 10 21 20, D-6900 Heidelberg 1 (DE)

(72) Erfinder: Karning, Heinrich, Albert-Fritz-Strasse 6, D-6900 Heidelberg (DE)

(74) Vertreter: Muschka, Wilhelm, ELTRO GMBH GESELLSCHAFT FÜR STRAHLUNGSTECHNIK Kurpfalzring 106 Postfach 10 21 20, D-6900 Heidelberg 1 (DE)

EP 0 011 679 B1

## Gaslaser mit transversaler Anregung

Die Erfindung betrifft einen Gaslaser mit transversaler Anregung bei Atmosphärendruck, bestehend aus einem Entladungsraum, in dem ein von einem Gasfluss umströmtes Elektrodensystem angeordnet ist, das eine symmetrisch zur Längsachse des Entladungsraumes liegende, mit einer aus dem Entladungsraum herausführenden Hochspannungsleitung verbundene und der Hauptentladung dienende Mittelelektrode mit der elektrischen Entladung dienenden Oberflächen aufweist, denen jeweils unter Bildung eines Elektrodenfreiraumes beabstandet eine Aussenelektrode gegenüberliegt, aus einem gefalteten Resonatorraum, der bei Laserbetrieb durch einen total reflektierenden Spiegel und durch einen mit ihm über die mechanische Stabilität gewährleistende Distanzelemente verbundenen teildurchlässigen Spiegel begrenzt ist, die beide an der gleichen ersten Stirnfläche jeweils in Höhe eines Freiraumes zwischen Mittel- und Aussenelektrode angeordnet sind, und der bei Verstärkerbetrieb anstelle der Spiegel von die Laserstrahlung durchlassenden Fenstern begrenzt ist, und aus Mitteln zur Strahlenumlenkung, die derart angeordnet sind, dass der Laserstrahl innerhalb des Resonatorraumes nacheinander jeden der Elektrodenfreiräume durchsetzt.

Ein solcher Laser ist aus der DE-A-2051734 bekannt. Er besitzt flache Elektroden und einen innerhalb des Lasergehäuses angeordneten Entladungsraum. Die Resonatoren und damit auch die Strahlengangfaltung dagegen befinden sich ausserhalb des Gehäuses. Ferner sind die Generatoren unsymmetrisch angeordnet, was sich auf die Symmetrie der Entladestromverteilung ungünstig auswirkt. In dem Gehäuse herrscht kein Normaldruck, was zusammen mit den Isolierplatten an den Innenwänden in der Herstellung einen zusätzlichen Aufwand bedeutet.

Ein ähnlicher Laser ist aus der europäischen Patentschrift 0001032 (frühere Anmeldung 78710.002.3) bekannt. Dieser ansonsten durchaus brauchbare Laser besitzt jedoch einen gestreckten Strahlengang und ist demzufolge relativ gross. Ausserdem wird die symmetrische Ausbildung der Funktionselemente nicht konsequent genug durchgeführt, so dass auch die Entladestromverteilung nicht optimal ist.

Die Fachzeitschrift IEEE Journal of Quantum Electronics, Vol. QE-8, Nr. 2, Februar 1972, Seiten 145 bis 149, behandelt einen TEA-Laser mit Trigger-Drähten zur Vorionisation sowie Elektroden, die ein Rogowski-Profil aufweisen. In US-A-3740662 werden kreisrunde Aussen- und Innenelektroden behandelt mit jeweils radial verlaufenden, gleichlangen Stegen sowie den Möglichkeiten, die Aussenelektrode in ihrem Bereich auch als Gehäusewand vorzusehen und den Gesamtaufbau rotationssymmetrisch auszubilden. Aus DE-A-2054096 schliesslich ist ein von einem Kühlerraum umgebener Laser mit speziellen Strömungsblechen für das Gas zu entnehmen.

Die Aufgabe der Erfindung wird in der Entwicklung eines gattungsgemässen Laser-Verstärkers gesehen, der bei vorgegebener niedriger Schusszahl mit möglichst geringen induktiven Widerständen behaftet ist sowie kompakt und nahezu beliebig kurz gestaltet werden kann.

Gemäss der Erfindung wird diese Aufgabe dadurch gelöst, dass die Mittelelektrode mindestens zwei der Entladung dienende Oberflächen aufweist, dass der mit dem Resonatorraum räumlich zusammenfallende Gasentladungsraum von einem Gesamtgehäuse umschlossen ist, dass die Mittel zur Strahlenumlenkung an der den Spiegeln gegenüberliegenden Stirnfläche des Gasentladungsraumes innerhalb desselben angeordnet sind, und dass das Gesamtgehäuse auf der den Umlenkmitteln zugewandten Seite einen dem Gasentladungsraum benachbarten Raum für eine elektronische Schaltung umschliesst.

Auf diese Weise wird es möglich, mit kürzeren Elektroden und demzufolge auch mit einem kürzeren Gehäuse auszukommen, ohne dass an der erbrachten Leistung etwas verloren geht. Wenn hierbei die Elektroden z.B. auf die Hälfte verkürzt werden, muss ihre konstruktive Aufgliederung dergestalt erfolgen, dass der Laserstrahl den Resonatorraum in zwei zueinander parallelen Strahlengängen – etwa nach Art einer Mäanderschleife – zweimal (hin und zurück) durchläuft, wenn dieselbe Leistung wie bei der ungekürzten Elektrode erbracht werden soll. Diese Massnahme wirkt sich auf die Baulänge der gesamten Vorrichtung günstig aus, weil dieselbe dann nurmehr etwa 60% der herkömmlichen Ausführungsformen beträgt.

Die symmetrische Bauform der elektrischen, optischen und mechanischen Komponenten erbringt sodann den Vorteil, dass sich die in den Leitungen fliessenden Ströme weitgehend aufheben und keine wirksamen Induktivitäten mehr übrigbleiben. Letztere verringern sich um den Faktor 4 bis 5, so dass auch auf eine Vorionisation verzichtet werden kann. Da sich die Verkürzung des Elektrodensystems bzw. seine Auffächerung sowie die damit zusammenhängende Anzahl der Durchläufe des Laserstrahls ebenso wie die Symmetrierung der Bauformen und Anordnungen praktisch unbegrenzt fortsetzen lässt, ist es vor allem eine Frage der Wirtschaftlichkeit, einen brauchbaren Kompromis hinsichtlich Baulänge und Symmetrie bzw. wirksamer Induktivität auf der einen und dem damit verbundenen Arbeitsaufwand auf der anderen Seite zu erzielen. Die Praxis hat erwiesen, dass ein optimaler Kompromis bei zwei bis maximal vier Durchläufen und einer entsprechenden Halbierung bis Viertelung der Baulänge erreicht wird.

Zweckmässig ist es, wenn wenigstens die Entladungsflächen der Mittelelektrode oder die der Aussenelektroden ein Rogowski-Profil besitzen. Denkbar ist es allerdings auch, dass die Mittelelektrode in ihrem Querschnitt ein regelmässiges Polygon darstellt, wobei jeder dieser Polygonflächen im Wandbereich des Gehäuses eine Aussen-

elektrode gegenüberliegt.

Was die Anordnung und Ausbildung der Aussenelektroden anbetrifft, so kann es von Vorteil sein, wenn dieselben in ihrem Bereich die eigentliche Gehäusewand ersetzen. Durch die Einbeziehung von Elektrodenteilen in die Gehäusewand können auch in Querschnittrichtung Raumeinsparungen erzielt werden. Die Gehäusewand kann aber auch als regelmässiges Polygon oder als rotationssymmetrischer Körper mit rundem oder eckigem Querschnitt ausgebildet sein.

In konstruktiver und funktioneller Hinsicht ist es von Bedeutung, dass der Resonatorraum an seinen Stirnseiten innerhalb des zylindrischen Gehäuses von zwei zueinander parallelen und in zur Längsachse senkrechten Ebenen verlaufenden Wänden begrenzt wird, die vorzugsweise als der Halterung der Spiegel bzw. Fenster und Mittel zur Strahlenumlenkung dienende Isolatoren, z.B. aus Keramik oder Quarzgut, gefertigt sind.

Vorteilhaft ist es ferner, dass der Entladungskreis von der Mittelelektrode nach den Aussenelektroden über einen aufgeladenen Kondensator sowie ein ihm vorgeschaltetes Thyratron oder eine ihm vorgeschaltete Funkenstrecke schliessbar ist und dass ein Koppelwiderstand mit seinem einen Ende zwischen Mittelelektrode und Kondensator und mit seinem anderen Ende an Masse geschaltet ist.

Für mittlere bis hohe Pulsfolgefrequenzen ist es darüberhinaus immer sinnvoll, wenn der Resonatorraum entweder von einem Kühler-Lüfterraum umgeben ist oder über wenigstens je eine im Bereich der Zwischenräume der Elektroden in einer der seitlichen Längswände vorgesehene, der Gasströmung dienende Ausnehmung mit dem Kühler-Lüfterraum verbunden ist. In vorstehendem Zusammenhang ist es dabei von Vorteil, dass die einander gegenüberliegenden seitlichen Längswände des Resonatorraums jeweils wenigstens eine der Gasströmung dienende Ausnehmung aufweisen und zwischen den beiden Ausnehmungen wenigstens der gaseinströmenden Seite ein Strömungsblech vorgesehen ist.

Im folgenden werden an Hand einer Zeichnung Ausführungsbeispiele der Erfindung näher erläutert, wobei die in den einzelnen Figuren einander entsprechenden Teile dieselben Bezugszeichen aufweisen. Es zeigt

Fig. 1 den Längsschnitt durch eine weitgehend symmetrisch ausgebildete Laserbauform,

Fig. 2 den Resonatorraum eines Lasers gemäss Fig. 1 mit in der Gehäusewand eingelassenen, rogowskiförmig ausgebildeten Aussenelektroden,

Fig. 3 den symmetrischen Stromfluss bei Laserbauformen gemäss Fig. 1 und 2,

Fig. 4 eine Mittelelektrode mit vier Entladeflächen und ihnen gegenüberliegenden Aussenelektroden – alle Elektroden mit Rogowski-Profil,

Fig. 5 eine Mittelelektrode mit einem regelmässigen Polygon als Querschnitt und den Polygonflächen gegenüberliegenden Aussenelektroden mit Rogowski-Profil,

Fig. 6 einen lediglich hinsichtlich der Gehäuseform unsymmetrischen Laser,

Fig. 7 einen Querschnitt durch die Laserbauform gemäss Fig. 6 mit einem um den Resonatorraum herumgelegten Kühler-Lüfterraum und

Fig. 8 einen Querschnitt durch die Laserbauform gemäss Fig. 1 mit einem seitlich befestigten Kühler-Lüfterraum.

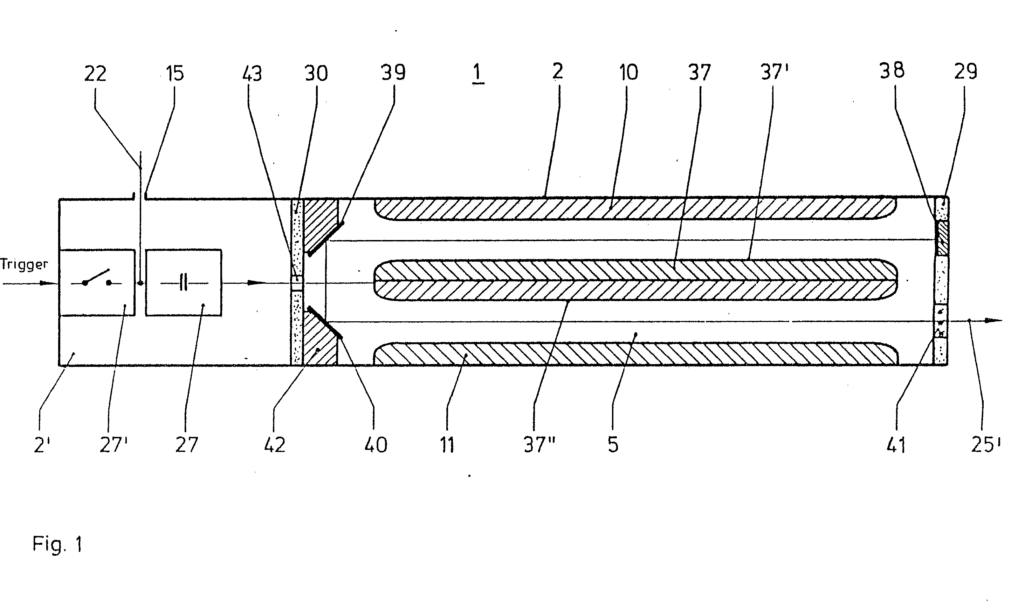

Fig. 1 zeigt die Prinzipskizze eines Gas-Lasers 1, dessen Gehäuse 2 aus einem symmetrischen Hohlkörper mit rundem oder eckigem Querschnitt besteht. Der Innenraum des Gehäuses ist in zwei Hälften unterteilt, deren eine einen Resonator- oder Entladungsraum 5 enthält, der von zwei zueinander parallelen und in zur Längsachse senkrechten Ebenen verlaufenden Wänden 29 und 30 aus Keramik oder Quarzgut begrenzt wird, die vornehmlich der Halterung der Spiegel 38 bzw. 41 dienen. Der totalreflektierend ausgebildete Spiegel 38 ist dabei an der das Gehäuse abschliessenden Isolatorwand 29 innenseitig dergestalt befestigt oder in dieser Wand eingelassen, dass der von ihm reflektierte Laserstrahl im Freiraum zwischen den noch zu besprechenden Elektroden 10 und 37 nach der gegenüberliegenden Wand 30 abgestrahlt wird, wo der totalreflektierende Spiegel 39 unter 45° zur Gehäuselängsachse befestigt ist. An dieser Stelle wird der Strahlenverlauf um 90° auf den dem Spiegel 39 diametral gegenüberliegenden, ebenfalls unter 45° zur Gehäuselängsachse befestigten totalreflektierenden Spiegel 40 umgelenkt, der den Strahlenverlauf seinerseits umlenkt, und zwar nochmals um 90°, so dass der Strahlenverlauf wieder in Richtung der Hauptachse des Gerätes, diesmal im Freiraum zwischen den Elektroden 37 und 11, verläuft und auf den in einer Ausnehmung der Wand 29 eingelassenen teildurchlässigen Spiegel 41 trifft bzw. in Pfeilrichtung 25 durch diesen hindurch nach aussen gelangt. Die Spiegel 39 und 40 sind an der innenseitigen Schrägfläche des Ringes 42 befestigt, der in die von dem Gehäuse 2 und der Wand 30 gebildeten Ecke eingepasst ist.

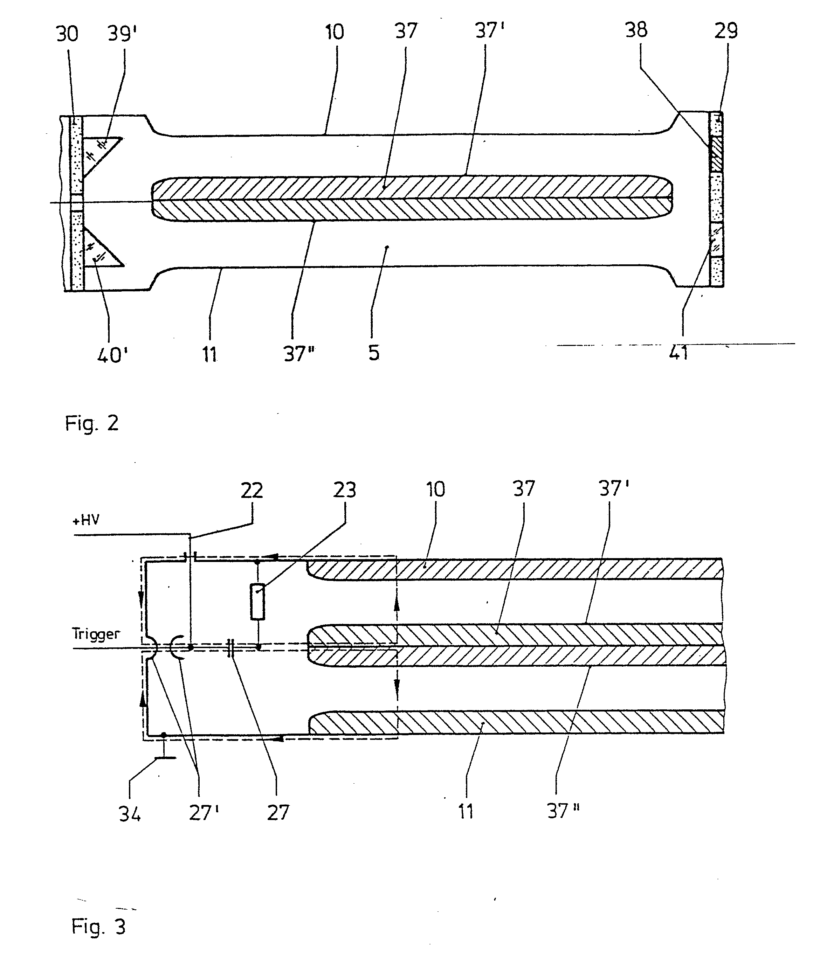

In dem Ausführungsbeispiel gemäss Fig. 2 sind Ring und Spiegel durch 45°-Prismen 39', 40' ersetzt, die direkt an der Wand 30 befestigt wurden.

Das Elektrodensystem 10, 11, 37 besteht aus der in der optischen Achse des Gehäuses 2 angeordneten Mittelelektrode 37, die an ihrer Aussenkontur zwei in entgegengesetzte Richtungen weisende Rogowski-Profile 37' und 37" besitzt. Letztere erzeugen jeweils mit der ihnen im Bereich der inneren Gehäusewand gegenüberliegenden weiteren Rogowski-Elektrode 10 bzw. 11 eine Entladung, durch die hindurch die Laserstrahlung geleitet wird. Die Elektroden 10 und 11 können hierbei entweder an der Gehäuseinnenwand befestigt sein oder aber – wie im Falle der Fig. 2 – die Gehäusewand in diesem Bereich ersetzen. In letzterem Falle sind in der Gehäusewand der Grösse dieser Elektroden entsprechende Ausnehmungen vorgesehen, in denen die Elektroden durch Löten, Schweissen oder Tiefziehen des Gehäuses befestigt werden.

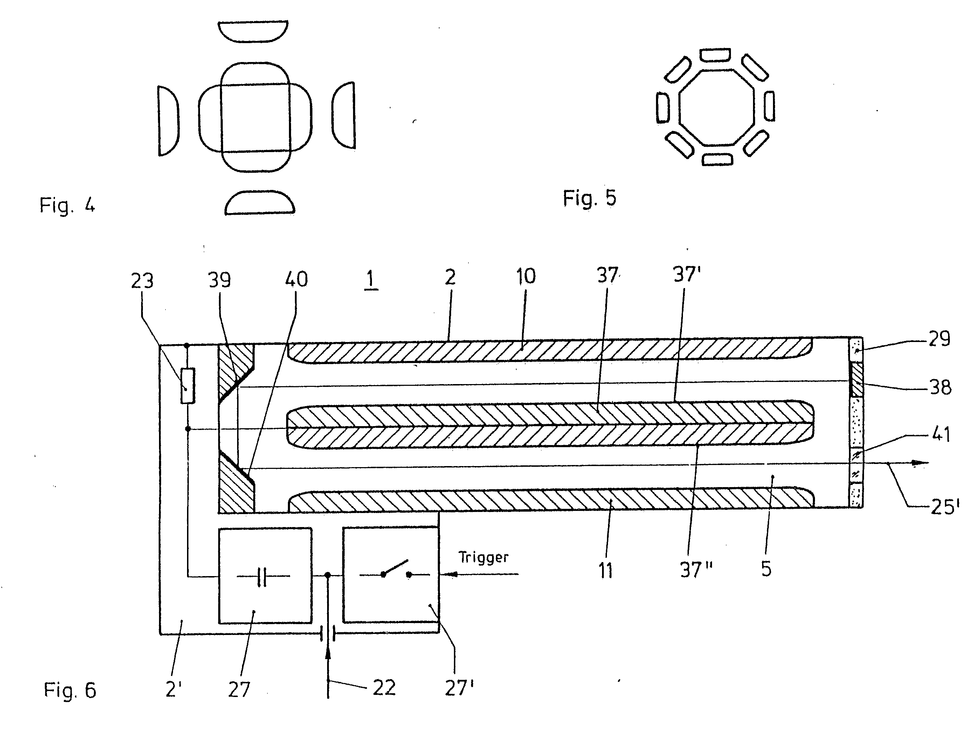

Ausser dem Resonatorraum 5 umschliesst das Gehäuse 2 auch noch den Raum 2' (Fig. 1 und 6), der die elektronische Schaltung 27, 27' enthält.

Mit der Bezugszahl 27' ist das die Mittelelektrode 37 zündende, ihr vorgeschaltete Thyratron bezeichnet, das bei einem anderen Ausführungsbeispiel auch eine Funkenstrecke sein kann. Thyratron bzw. Funkenstrecke sind über einen Kondensator 27 und durch die Ausnehmung 43 in der Wand 30 mit der Mittelelektrode 37 verbunden, wobei zwischen Mittelelektrode und Kondensator der anderenends an Masse 34 liegende Koppelwiderstand 23 geschaltet ist (Fig. 3). Zwischen dem Kondensator und dem Thyratron bzw. der Funkenstrecke liegt die von aussen über den Isolator 15 in das Gehäuseinnere geführte Hochspannungsleitung 22 an. Aus Fig. 3 ist darüberhinaus ersichtlich, dass die symmetrische Bauform auch einen symmetrischen Stromfluss zulässt. Die in dem Leitungssystem angedeuteten Ströme heben sich weitgehend auf, so dass die wirksamen induktiven Widerstände $X_1 = \omega \cdot L$ nahezu gegen Null gehen.

Die Fig. 4 und 5 zeigen zwei der vielen weiteren Möglichkeiten, wie symmetrische Elektrodensysteme für den vorliegenden Zweck gestaltet sein können: Während bei der Kreuzform der Fig. 4 alle Elektrodenflächen ein Rogowski-Profil besitzen, ist es bei einem anderen, zeichnerisch nicht dargestellten Ausführungsbeispiel auch denkbar, dass nur die Mittel- oder nur die Aussenelektroden diese Art von Profil besitzen, während die jeweilige Gegenelektrode eine plane Oberfläche aufweist. Bei dem Ausführungsbeispiel der Fig. 5 besitzt die polygonförmige Mittelelektrode dagegen plane Oberflächen, während die jeweiligen Gegenelektroden ein Rogowski-Profil besitzen. Bei einem anderen, zeichnerisch gleichfalls nicht dargestellten Ausführungsbeispiel wäre auch hier der umgekehrte Fall denkbar, dass die Polygonflächen Rogowski-Profile besitzen, während die jeweilige Gegenelektrode eine plane Ionisationsfläche aufweist oder aber auch, dass sämtliche Ionisationsflächen mit Rogowski-Profilen bestückt sind. Darüberhinaus gibt es selbstverständlich noch eine grosse Anzahl ähnlicher Varianten, die sich allesamt in symmetrisch oder auch unsymmetrisch ausgebildete Gehäuseformen einbauen lassen.

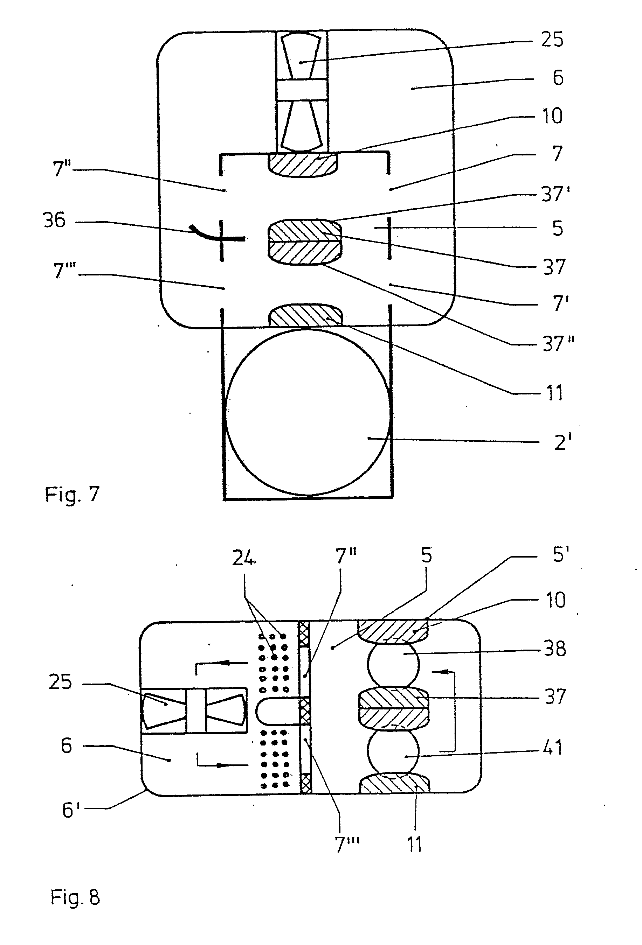

In den Fig. 6 und 7 ist sodann ein Resonatorraum 5 und ein Elektrodensystem 10, 11, 37 dargestellt, die in allen Einzelheiten Fig. 1 entsprechen. Lediglich der die elektronischen Baueinheiten 27 und 27' sowie die Hochspannungszuführung enthaltende Gehäuseteil ist − in Blickrichtung gesehen − an die Unterseite des Resonatorraums 5 verlegt. Insofern ist die Gehäusekonzeption leicht unsymmetrisch und weist daher auch geringfügig höhere Induktivitätswerte als die zuvor besprochenen Ausführungsbeispiele auf. Ausserdem sind in Fig. 7 die Aussenseiten des Resonatorraums 5 von einem Kühler-Lüfterraum 6 umgeben. Die funktionelle Verbindung dieser beiden Räume erfolgt dabei über je eine Ausnehmung 7 bis 7''', die in den einander gegenüberliegenden seitlichen Längswänden des Resonatorraums jeweils im Bereich der Elektrodenzwischenräume vorgesehen sind. Zwischen den beiden Ausnehmungen 7'' und 7''' ist ein Strömungsblech 36 befestigt, das sowohl in den Kühler-Lüfterraum als auch in den Resonatorraum hineinragt.

Bei dem Ausführungsbeispiel der Fig. 8 ist der Kühler-Lüfterraum 6 seitlich des Resonatorraums 5 angeordnet. Es handelt sich hierbei entweder um eine einzige, entsprechend unterteilte Gehäuseeinheit oder aber um zwei Gehäuseeinheiten, die nachträglich aneinandergeflanscht wurden. Die funktionelle Verbindung erfolgt auch hier über zwei Ausnehmungen 7'' und 7''' in einer der seitlichen Längswände, die jeweils im Bereich der Elektrodenzwischenräume angeordnet sind. In dem dargestellten Ausführungsbeispiel enthält der Kühler-Lüfterraum 6 einen von Kühlrippen 24 umgebenen Gasumwälzer 25. Bei einem anderen, zeichnerisch nicht dargestellten Ausführungsbeispiel können auch mehrere Gasumwälzer vorgesehen sein. Auch ist es denkbar, dass die Frischgaszufuhr ohne Kühlrippen nur mit Hilfe eines oder mehrerer Gasumwälzer erfolgt.

Insgesamt gesehen handelt es sich hierbei um einen herstellungstechnisch leicht zu realisierenden, wenig störanfälligen und hinsichtlich seines Wirkungsgrades ausgesprochen günstigen Gaslaser, der als Sender und als Verstärker Verwendung finden kann. Bei der Verwendung als Verstärker müssen lediglich die Spiegel 38 und 41 durch Abschlussfenster ersetzt werden, die die verstärkte Laserstrahlung hindurchlassen.

## Patentansprüche

1. Gaslaser mit transversaler Anregung bei Atmosphärendruck, bestehend aus einem Entladungsraum (5), in dem ein von einem Gasfluss umströmtes Elektrodensystem (10, 11, 37) angeordnet ist, das eine symmetrisch zur Längsachse des Entladungsraumes liegende, mit einer aus dem Entladungsraum herausführenden Hochspannungsleitung (22) verbundene und der Hauptentladung dienende Mittelelektrode (37) mit der elektrischen Entladung dienenden Oberflächen (37', 37'') aufweist, denen jeweils unter Bildung eines Elektrodenfreiraumes beabstandet eine Aussenelektrode (10, 11) gegenüberliegt, aus einem gefalteten Resonatorraum, der bei Laserbetrieb durch einen total reflektierenden Spiegel (38) und durch einen mit ihm über die mechanische Stabilität gewährleistende Distanzelemente verbundenen teildurchlässigen Spiegel (41) begrenzt ist, die beide an der gleichen ersten Stirnfläche jeweils in Höhe eines Freiraumes zwischen Mittel- und Aussenelektrode angeordnet sind, und der bei Verstärkerbetrieb anstelle der Spiegel (38, 41) von die Laserstrahlung durchlassenden Fenstern begrenzt ist, und aus Mitteln (39, 40) zur Strahlenumlenkung, die derart angeordnet sind, dass der Laserstrahl innerhalb des Resonatorraumes nacheinander jeden der Elektrodenfreiräume durchsetzt, dadurch gekennzeichnet, dass die Mittelelektrode (37) mindestens zwei der Entladung dienende Oberflächen (37', 37'') aufweist, dass der mit dem Resonatorraum (5) räumlich zusammenfallende Gasentladungsraum (5) von einem Gesamtgehäuse (2) umschlossen ist, dass die Mittel zur Strahlenumlenkung (39, 40) an der den Spiegeln (38, 41) gegenüberliegenden Stirnfläche des Gasentladungsraumes (5) innerhalb desselben angeordnet sind, und dass das Gesamtgehäuse (2) auf der den Umlenkmitteln zugewandten Seite einen dem Gasentladungsraum (5) benachbarten Raum (2') für eine elektronische Schaltung (27, 27') umschliesst.

2. Vorrichtung nach Anspruch 1, dadurch gekennzeichnet, dass wenigstens die Entladungsfläche der Mittelelektrode (37) oder die der Aussenelektroden (10, 11) ein Rogowski-Profil besitzen (Fig. 1 bis 8).

3. Vorrichtung nach einem der Ansprüche 1 oder 2, dadurch gekennzeichnet, dass die Mittelelektrode (37) in ihrem Querschnitt ein regelmässiges Polygon darstellt (Fig. 5).

4. Vorrichtung nach einem der Ansprüche 1 bis 3, dadurch gekennzeichnet, dass die Aussenelektroden (10 bzw. 11) in ihrem Bereich die Gehäusewand ersetzen (Fig. 2).

5. Vorrichtung nach einem der Ansprüche 1 bis 4, dadurch gekennzeichnet, dass die Gehäusewand als regelmässiges Polygon oder als rotationssymmetrischer Körper mit rundem oder eckigem Querschnitt ausgebildet ist.

6. Vorrichtung nach einem der Ansprüche 1 bis 5, dadurch gekennzeichnet, dass der Resonatorraum (5) an seinen Stirnseiten innerhalb des zylindrischen Gehäuses (2) von zwei zueinander parallelen und in zur Längsachse senkrechten Ebenen verlaufenden Wänden (29, 30) begrenzt wird, die vorzugsweise als der Halterung der Spiegel bzw. Fenster und Mittel zur Strahlenumlenkung (38, 39, 40, 41) dienende Isolatoren, z.B. aus Keramik oder Quarzgut, gefertigt sind (Fig. 1 und 2).

7. Vorrichtung nach einem der Ansprüche 1 bis 6, dadurch gekennzeichnet, dass der Entladungskreis von der Mittelelektrode (37) nach den Aussenelektroden (10, 11) über einen aufgeladenen Kondensator (27) sowie ein ihm vorgeschaltetes Thyratron oder eine ihm vorgeschaltete Funkenstrecke (27') schliessbar ist und dass ein Koppelwiderstand (23) mit seinem einen Ende zwischen Mittelelektrode und Kondensator und mit seinem anderen Ende an Masse (34) geschaltet ist (Fig. 3 und 6).

8. Vorrichtung nach einem der Ansprüche 1 bis 7, dadurch gekennzeichnet, dass der Resonatorraum (5) entweder von einem Kühler-Lüfterraum (6) umgeben ist oder über wenigstens je eine im Bereich der Zwischenräume der Elektroden (10 und 37 bzw. 37 und 11) in einer der seitlichen Längswände vorgesehene, der Gasströmung dienende Ausnehmung (7" bzw. 7''') mit dem Kühler-Lüfterraum (6) verbunden ist (Fig. 7 bzw. 8).

9. Vorrichtung nach Anspruch 8, dadurch gekennzeichnet, dass die einander gegenüberliegenden seitlichen Längswände des Resonatorraumes (5) jeweils wenigstens eine der Gasströmung dienende Ausnehmung (7 bis 7''') aufweisen und zwischen den beiden Ausnehmungen wenigstens der gaseinströmenden Seite ein Strömungsblech (36) vorgesehen ist (Fig. 7).

## Claims

1. Gas laser with transverse excitation at atmospheric pressure, comprising a discharge chamber (5) in which is arranged an electrode system (10, 11, 37) over which gas flows, said electrode system having a middle electrode (37) which is situated symmetrically about the longitudinal axis of the discharge chamber, which serves for the main discharge and which is connected to a high voltage lead (22) extending out of the discharge chamber, said middle electrode (37) having surfaces (37', 37") for the purpose of electric discharge, each of these discharge surfaces (37', 37") being situated opposite an outer electrode (10, 11) spaced apart from the middle electrode to form an electrode-free space, further comprising a folded resonator chamber which, when the apparatus is used as a laser energy transmitter, is bounded by a totally reflective mirror (38) and by a partially transmittent mirror (41) connected to the totally reflective mirror (38) by spacer elements which provide mechanical stability, both these mirrors being arranged on the same, first end face, each in registry with a free space between the middle electrode and an outer electrode, and which resonator chamber, when the apparatus is used as laser amplifier, is bounded by windows transmitting the laser beam instead of by the mirrors (38, 41), and further comprising means (39, 40) for deflecting the beam, which means are so arranged that inside the resonator chamber, the laser beam travels successively through each of the electrode-free spaces, characterized in that the middle electrode (37) has at least two surfaces (37', 37") serving for discharge, in that the gas discharge chamber (5), which coincides spatially with the resonator chamber (5), is enclosed by an overall housing (2), in that the means for beam deflection (39, 40) are arranged at that end face of the gas discharge chamber (5) which is situated opposite the mirrors (38, 41) and inside the gas discharge chamber, and in that the overall housing (2) encloses a chamber (2') for an electronic circuit (27, 27') adjacent to the gas discharge chamber (5) on the side having the deflecting means.

2. Apparatus according to claim 1, characterized in that at least the discharge surfaces of the middle electrode (37) or those of the outer electrodes (10, 11) have a Rogowski profile (Figs. 1 to 8).

3. Apparatus according to claim 1 or claim 2, characterized in that the middle electrode (37) has the form of a regular polygon in cross-section (Fig. 5).

4. Apparatus according to any of claims 1 to 3, characterized in that the outer electrodes (10 and 11) replace the wall of the housing where they are situated (Fig. 2).

5. Apparatus according to any of claims 1 to 4, characterized in that the wall of the housing has the form of a regular polygon or of a rotationally symmetric body with round or angular cross-section.

6. Apparatus according to any of claims 1 to 5, characterized in that the resonator chamber (5) is bounded at its end faces inside the cylindrical housing (2) by two walls (29, 30) which are parallel to each other and extend in planes perpendicular to the longitudinal axis, which walls are preferably fabricated as insulators, e.g. of ceramics or quartz material, serving as supports for the mirrors or windows and the means for beam deflection (38, 39, 40, 41) (Figs. 1 and 2).

7. Apparatus according to any of claims 1 to 6, characterized in that the discharge circuit from the middle electrode (37) to the outer electrodes (10, 11) can be closed by way of a charged capacitor (27) and a thyratron connected in series therewith or a spark gap connected in series therewith (27'), and in that a coupling resistor (23) is connected at one of its ends to the middle electrode and the capacitor and at its other end to earth (34) (Figs. 3 and 6).

8. Apparatus according to any of claims 1 to 7, characterized in that the resonator chamber (5) is either surrounded by a cooler-ventilator chamber (6) or is connected to a cooler ventilator chamber (6) through, in each case, at least one opening (7" and 7'", respectively) provided for the purpose of gas flow and formed in lateral longitudinal walls of the resonator chamber in the region of the gaps between the electrodes (10 and 37, and 37 and 11, respectively). (Figs. 7 and 8).

9. Apparatus according to claim 8, characterized in that each of the longitudinal walls of the resonator chamber (5) situated opposite each other has (in each case) at least one opening (7 to 7'") for gas flow, and a flow baffle (36) is provided between the openings, at least on the gas inflow side (Fig. 7).

**Revendications**

1. Laser à gaz avec excitation transversale à la pression atmosphérique, se composant d'un volume de décharge (5) dans lequel est disposé un système d'électrodes (10, 11, 37) balayé par un flux gazeux, qui comporte une électrode centrale (27) disposée symétriquement par rapport à l'axe longitudinal du volume de décharge, reliée à un conducteur de haute tension (22) sortant du volume de décharge, servant à la décharge principale et pourvue de surfaces (37', 37") servant à la décharge électrique et qui sont chacune placées en regard d'une électrode extérieure (10, 11) en formant un intervalle entre électrodes, d'un volume de résonateur coudé qui est délimité lors d'un fonctionnement en laser par un miroir totalement réfléchissant (38) et par un miroir partiellement transparent (41) et relié à celui-ci par l'intermédiaire d'éléments d'espacement garantissant la stabilité mécanique, ces deux miroirs (38, 41) étant disposés sur la même première surface frontale respectivement à la hauteur d'un volume libre existant entre l'électrode centrale et une électrode extérieure, et qui est délimité lors d'un fonctionnement en amplificateur, à la place des miroirs, par des fenêtres laissant passer le rayonnement laser, le laser se composant également de moyens (39, 40) de déviation de rayonnement qui sont disposés de telle sorte que le rayon laser traverse, à l'intérieur du volume de résonateur, successivement chacun des volumes libres entre électrodes, caractérisé en ce que l'électrode centrale (37) comporte au moins deux surfaces (37', 37") servant à la décharge, en ce que le volume de décharge gazeuse (5) coïncidant spatialement avec le volume de résonateur (5) est entouré par un carter global (2), en ce que les moyens de deviation des rayons (39, 40) sont disposés sur la surface frontale du volume de décharge gazeuse qui est placée à l'opposé des miroirs (38, 41) et à l'intérieur dudit volume (5), et en ce que le carter global (2) délimite, sur le côté tourné vers les moyens de déviation, un volume (2') de réception d'un circuit électronique (27, 27') qui est adjacent au volume de décharge gazeuse (5).

2. Dispositif selon la revendication 1, caractérisé en ce qu'au moins les surfaces de décharge de l'électrode centrale (37) ou celles des électrodes extérieures (10, 11) comportent un profil de Rogowski (Fig. 1 à 8).

3. Dispositif selon l'une des revendications 1 ou 2, caractérisé en ce que l'électrode centrale (37) a en section droite la forme d'un polygone régulier (Fig. 5).

4. Dispositif selon l'une des revendications 1 à 3, caractérisé en ce que les électrodes extérieures (10, 11) remplacent les paroi de carter dans leur zone (Fig. 2).

5. Dispositif selon l'une des revendications 1 à 4, caractérisé en ce que la paroi de carter est agencée sous forme d'un polygone régulier ou d'un corps de révolution à section droite circulaire ou polygonale.

6. Dispositif selon l'une des revendications 1 à 5, caractérisé en ce que le volume de résonateur (5) est délimité sur ses côtés frontaux, à l'intérieur du carter cylindrique (2), par deux parois (29, 30) mutuellement parallèles, situées dans des plans perpendiculaires à l'axe longitudinal et qui sont fabriquées avantageusement de façon à supporter les isolateurs servant de miroirs ou de fenêtres et de moyens de déviation de rayons (38, 39, 40, 41), par exemple en céramique ou en quartz (Fig. 1 et 2).

7. Dispositif selon l'une des revendications 1 à 6, caractérisé en ce que le circuit de décharge allant de l'électrode centrale (37) aux électrodes extérieures (10, 11) peut être fermé par l'intermédiaire d'un condensateur chargé (27) et d'un thyratron branché en série avec lui ou bien d'un éclateur branché en série avec lui (27') et en ce qu'une résistance de couplage (23) est connectée par une de ses extrémités entre l'électrode centrale et le condensateur et par son autre extrémité à la masse (34) (Fig. 3 et 6).

8. Dispositif selon l'une des revendications 1 à 7, caractérisé en ce que le volume de résonateur (5) est entouré par un volume de refroidissement-ventilation (6) par l'intermédiaire d'au moins un évidement respectif (7", 7'") prévu dans la zone des volumes intermédiaires entre électrodes (10

**0011679**

et 37, 37 et 11) dans une des parois longitudinales latérales et servant à l'écoulement de gaz.

9. Dispositif selon la revendication 8, caractérisé en ce que les parois longitudinales latérales mutuellement opposées du volume de résonateur (5) comportent respectivement au moins un évidement servant à l'écoulement de gaz (7 à 7''') et en ce qu'il est prévu entre les deux évidements, au moins sur le côté d'entrée du gaz, une tôle d'écoulement (36) (Fig. 7).

Fig. 1

30  39'  10  37  37'  38  29

40'  11  37"  5  41

Fig. 2

+HV

22  23  10  37  37'

Trigger

34  27'  27  11  37"

Fig. 3

Fig. 5

Fig. 4

Fig. 6

29
38
41
25'
37'
5
37
37"
11
10
2
1
Trigger
27'
22
40
39
27
23
2'

Fig. 7

Fig. 8